# EUROPÄISCHE PATENTSCHRIFT

(11) **EP 2 443 320 B1**
(45) Veröffentlichungstag und Bekanntmachung des Hinweises auf die Patenterteilung: **29.11.2017**
(21) Anmeldenummer: 08840731.7
(22) Anmeldetag: 16.10.2008
(51) Int. Cl.: F01K 13/02

(54) **VERFAHREN ZUM BETRIEB EINES KRAFTWERKS**
METHOD FOR OPERATING A POWER STATION
PROCÉDÉ DE FONCTIONNEMENT D'UNE CENTRALE ÉLECTRIQUE

(30) Priorität: 16.10.2007 DE 102007049764
(43) Veröffentlichungstag der Anmeldung: 25.04.2012
(73) Patentinhaber: Siemens Aktiengesellschaft, 80333 München (DE)
(72) Erfinder: HELLER, Jan, 90461 Nürnberg (DE); GADINGER, Jörg, 90419 Nürnberg (DE); MEERBECK, Bernhard, 60316 Frankfurt (DE)
(86) Internationale Anmeldenummer: PCT/EP2008/063960
(87) Internationale Veröffentlichungsnummer: WO 2009/050230

(56) Entgegenhaltungen:
- WO-A1-98/26336
- DE-A1- 19 904 974
- DE-B3- 10 261 171
- US-A1- 2006 178 762
- BEAUFAYS F ET AL: "Application of neural networks to load-frequency control in power systems", NEURAL NETWORKS, ELSEVIER SCIENCE PUBLISHERS, BARKING, GB, Bd. 7, Nr. 1, 1. Januar 1994 (1994-01-01), Seiten 183-194, XP024392735, ISSN: 0893-6080, DOI: 10.1016/0893-6080(94)90067-1 [gefunden am 1994-01-01]
- BROWN M D ET AL: "Modelling and control of generating units using neural network techniques", CONTROL APPLICATIONS, 1994., PROCEEDINGS OF THE THIRD IEEE CONFERENCE ON GLASGOW, UK 24-26 AUG. 1994, NEW YORK, NY, USA,IEEE, 24. August 1994 (1994-08-24), Seiten 735-740, XP010130971, DOI: 10.1109/CCA.1994.381379 ISBN: 978-0-7803-1872-4
- MAKANSI J: "PLANTS GAIN CONFIDENCE IN OPTIMIZATION SOFTWARE", POWER, MCGRAW-HILL COMPAGNY, NEW YORK, NY, US, Bd. 142, Nr. 5, 1. September 1998 (1998-09-01), XP000784359, ISSN: 0032-5929
- MATHUR A ET AL: "TURBINE BACK PRESSURE IDENTIFICATION AND OPTIMIZATION WITH LEARNING NEURAL NETWORKS", ADVANCES IN INSTRUMENTATION AND CONTROL, INSTRUMENT SOCIETY OF AMERICA, RESEARCH TRIANGLE PARK, US, Bd. 45, Nr. PART 01, 1. Januar 1990 (1990-01-01), Seiten 229-236, XP000171984, ISSN: 1054-0032

## Beschreibung

Die Erfindung betrifft ein Verfahren zum Betrieb eines Kraftwerks sowie eine Leittechnik für ein Kraftwerk. Ein solches Verfahren bzw. Leittechnik ist zum Beispiel in Dokument US2006/178762 A1 offenbart. In Kraftwerken, insbesondere Dampfkraftwerken, wurde bei einer Änderung der elektrischen Leistung des Kraftwerks ("Hochfahren" bzw. "Runterfahren") bisher wie folgt vorgegangen: Zunächst wurde der Sollwert der elektrischen Leistung festgelegt. Anschließend wurde die zum Erreichen dieses Leistungs-Sollwertes benötigte Wärmeleistung unter Verwendung eines festen, d.h. in allen Lastbereichen konstanten Wirkungsgrades (z.B. 50%) berechnet. Der Wirkungsgrad (Kesselwirkungsgrad) stellt den Zusammenhang zwischen der elektrischen Soll-Leistung und der Wärmeleistung (Verbrennung von Brennstoffen) her und dient zur Vorsteuerung des Brennstoffs in den Blockregelungsstrukturen des Kraftwerks. Trotzdem der Wirkungsgrad von vielen Parametern abhängig ist, wird er in den Leittechnik-Lösungen verschiedener Anbieter oft nur aus Auslegungsdaten vorausberechnet und als fester oder nur von einer Variablen abhängiger Wert eingestellt. Weicht ein Parameter von den Auslegungsdaten ab, so wird aufgrund dessen eine falsche Brennstoffmenge vorgesteuert, und im Lastwechselbetrieb kann es zu Abweichungen der Hauptregelgrößen (Generatorleistung und Heißdampf-Druck) kommen.

Eine Aufgabe der Erfindung ist es, den Betrieb eines Kraftwerks zu verbessern.

Diese Aufgabe wird durch die in den unabhängigen Patentansprüchen angegebenen Erfindungsgegenstände gelöst. Vorteilhafte Ausführungsformen der Erfindung sind in den Unteransprüchen angegeben.

Das erfindungsgemäße Verfahren zum Betrieb eines Kraftwerks zeichnet sich dadurch aus, dass ein in die Leittechnik des Kraftwerks integriertes künstliches neuronales Netz im laufenden Kraftwerksbetrieb unter Vorgabe wenigstens eines für einen zukünftigen Zeitpunkt gewünschten Betriebsparameters eine für diesen zukünftigen Zeitpunkt gültige und von einer Mehrzahl von Einflussgrößen abhängige Kenngröße oder eine hieraus abgeleitete Kenngröße ermittelt und die Leittechnik unter automatischer Verwendung dieser Kenngröße einen regelnden und/oder steuernden Eingriff in den Kraftwerkbetrieb zum Erreichen des gewünschten Betriebsparameters durchführt.

Die erfindungsgemäße Leittechnik für ein Kraftwerk zeichnet sich dadurch aus, dass sie ein integriertes künstliches neuronales Netz sowie eine Regelungs- und/oder Steuerungskomponente aufweist, wobei das integrierte künstliche neuronale Netz zur Ermittlung einer von einer Mehrzahl von Einflussgrößen abhängigen Kenngröße unter Vorgabe wenigstens eines für einen zukünftigen Zeitpunkt gewünschten Betriebsparameters im laufenden Kraftwerksbetrieb ausgebildet ist und die Regelungs- und/oder Steuerungskomponente zum regelnden und/oder steuernden Eingriff in den Kraftwerksbetrieb unter automatischer Verwendung dieser Kenngröße zum Erreichen des gewünschten Betriebsparameters ausgebildet ist.

Unter der Leittechnik eines Kraftwerks wird dabei das Leitsystem im Leitstand des Kraftwerks verstanden, in dem die Datenströme der untergeordneten Ebenen, wie beispielsweise Signale der Mess-, Steuer- und Regelungstechnik zusammengefasst werden, um den gesamten Betriebsprozess zu steuern bzw. zu regeln und zu überwachen. Es wird davon ausgegangen, dass es sich bei der von dem künstlichen neuronalen Netz zu ermittelnden Kenngröße um einen Wirkungsgrad handelt. Ebenso sind die Vorteile der vorliegenden Erfindung anhand der Ermittlung eines Wirkungsgrades beschrieben. Ist der zukünftige Wirkungsgrad für eine bestimmte elektrische Soll-Leistung bekannt, dann kann die zukünftig benötigte Wärmeleistung und damit auch der zukünftige Brennstoffbedarf ermittelt und bei der Regelung bzw. Steuerung der Brennstoffzufuhr während des Hoch- bzw. Runterfahrens des Kraftwerks berücksichtigt werden. Das Hoch- bzw. Runterfahren des Kraftwerks ist dabei wesentlich genauer möglich als bei Verwendung eines fest vorgegebenen Wirkungsgrades. Dies führt zu einem verbesserten Kraftwerksbetrieb. Anstelle des Wirkungsgrades, z.B. des Wirkungsgrades eines Kraftwerkblockes oder einer anderen Hauptregelungsstruktur des Kraftwerks, kann die der vorliegenden Erfindung zu Grunde liegende Idee aber auch anderweitig eingesetzt werden. So ist es grundsätzlich möglich, mit Hilfe eines in die Leittechnik des Kraftwerks integrierten künstlichen neuronalen Netzes eine für den Betrieb des Kraftwerks relevante Kenngröße zu ermitteln und diese dann zur Regelung und/oder Steuerung des Kraftwerksbetriebs einzusetzen.

Die Erfindung schlägt vor, eine Vorausberechnung des Wirkungsgrades des Kraftwerks für einen bestimmten zukünftigen Lastpunkt bei Vorgabe eines gewünschten Leistungs-Sollwertes und unter Berücksichtigung weiterer Parameter, wie bspw. der Massenströme der verschiedenen Brennstoffe oder der Kühlwassertemparatur vorzunehmen. Die Berechnung erfolgt dabei mit Hilfe eines künstlichen neuronalen Netzes, das in die Leittechnik des Kraftwerks integriert ist. Mit anderen Worten erfolgt keine separate, unabhängige, auf einem Drittsystem ausgeführte Berechnung des Wirkungsgrades, dessen Wert anschließend erst noch in das Leitsystem des Kraftwerks übernommen werden müsste. Statt dessen wird die Ausgangsgröße des neuronalen Netzes automatisch als Eingangsgröße der Kraftwerkssteuerung verwendet. Das Erstellen und Trainieren (Anlernen) des neuronalen Netzes erfolgt kraftwerksindividuell über einen längeren Zeitraum, bspw. mehrere Monate. Dabei wird der Wirkungsgrad des Kraftwerks für eine Vielzahl von Zeitpunkten mit konstantem Kraftwerksbetrieb basierend auf den zur Verfügung stehenden realen Datensätzen des Kraftwerks berechnet.

Unter Verwendung der vorliegenden Erfindung ist nun eine Änderung der elektrischen Leistung des Kraftwerks ("Hochfahren" bzw. "Runterfahren") wie folgt möglich: Nach dem Festlegen eines Leistungs-Sollwertes wird der zukünftige Wirkungsgrad für den entsprechenden Lastpunkt mit Hilfe des in der Leittechnik des Kraftwerks integrierten künstlichen neuronalen Netzes ermittelt. Entsprechend dieser Wirkungsgradinformation erfolgt eine Vorsteuerung der Brennstoffzufuhr. Mit anderen Worten wird die Brennstoffzufuhr entsprechend erhöht oder verringert.

Gegenüber den aus dem Stand der Technik bekannten Verfahren zeichnet sich die vorliegende Erfindung also nicht nur dadurch aus, dass überhaupt ein variabler Wirkungsgrad Verwendung findet. Wesentlich ist auch, dass der Wirkungsgrad (oder eine andere Kenngröße des Kraftwerksbetriebes) durch ein künstliches neuronales Netz ermittelt wird, welches direkt in die Leittechnik des Kraftwerks integriert ist und damit unmittelbar ("online") in den Kraftwerksbetrieb eingreift, ohne dass hierfür zwingend menschliches Zutun erforderlich ist. Die Regelung und/oder Steuerung des Kraftwerksbetriebs entsprechend der ermittelten Kenngröße erfolgt mit anderen Worten selbstständig durch die Leittechnik. Wird auch der gewünschte Kenngrößen-Sollwert des Kraftwerks ohne menschliches Zutun vorgegeben, bspw. aufgrund einer automatischen Anforderung innerhalb eines Kraftwerkverbundes, so erlaubt die vorliegende Erfindung eine vollkommen autarke Kraftwerkssteuerung bzw. -regelung. Mit der vorliegenden Erfindung kann somit nicht nur ein sehr viel genaueres Anfahren eines gewünschten Leistungs-Sollwertes erfolgen, wobei der Bedarf einer automatischen Nachregulierung unter Verwendung eines Korrekturreglers minimiert wird. Darüber hinaus können subjektive und damit fehlerbehaftete menschliche Entscheidungen bei der Kraftwerkssteuerung weitgehend ausgeschlossen werden. Durch die Integration des künstlichen neuronalen Netzes in die Leittechnik des Kraftwerks ist es außerdem nicht erforderlich, eine separate Rechnerumgebung für den Betrieb des neuronalen Netzes bereitzustellen. Dadurch können weitere Fehlerquellen ausgeschlossen werden.

Eine Grundidee der Erfindung ist es also, durch eine Bereitstellung des zukünftigen Wirkungsgrades des Kraftwerks eine besonders genaue Ansteuerung eines gewünschten Leistungs-Sollwertes zu erreichen. Dabei ist es unerheblich, um welche Art von Kraftwerk es sich handelt. Die Erfindung wird nachfolgend am Beispiel eines Dampfkraftwerks beschrieben. Ebenso unerheblich ist es, ob lediglich eine einzige Brennstoffsart zur Verfügung steht, oder ob - wie in dem nachfolgend beschriebenen Ausführungsbeispiel -verschiedene Brennstoffe verwendet werden (wie beispielsweise Erdgas, Hochofengas und Koksgas).

Vorzugsweise wird die ermittelte Kenngröße, der Wirkungsgrad, weniger zum Regeln, als vielmehr zum Steuern des Kraftwerksbetriebs verwendet. Da mit Hilfe des künstlichen neuronalen Netzes ein sehr genauer Vorsteuerwert eingestellt werden kann, wird die Regelung entlastet. Mit anderen Worten ist ein (Nach)Regeln kaum noch erforderlich.

Der Wirkungsgrad wird dabei unter Vorgabe eines gewünschten Sollwertes der elektrischen Leistung des Kraftwerks für einen zukünftigen Lastpunkt ermittelt. Zur Definition dieses Lastpunktes dienen eine begrenzte Anzahl von Betriebsparametern, allen voran die elektrische Soll-Leistung des Kraftwerks. Weitere Betriebsparameter sind die Kühlwassertemperatur sowie die Energieströme und die Heizwerte der verwendeten Brennstoffe. Mit anderen Worten ergibt sich der zukünftige Wirkungsgrad nicht ausschließlich unter Berücksichtigung des gewünschten Leistungs-Sollwertes. Vielmehr werden bei der Ermittlung des Wirkungsgrades auch weitere Einflussgrößen berücksichtigt.

Somit ergibt sich aus der vorliegenden Erfindung ein verbessertes Verfahren zum Betrieb eines Kraftwerks durch Vorab-Ermittlung des Wirkungsgrades. Dadurch kann regelungstechnisch besser auf ein stark variierendes Kesselverhalten reagiert werden. Hierzu wird ein künstliches neuronales Netz verwendet, welches das Kesselverhalten des Kraftwerks abbildet und den Kesselwirkungsgrad "online" berechnet. Das neuronale Netz wird erstellt und parametriert basierend auf den Datensätzen des Kraftwerks, die alle Einflussgrößen auf den Kesselwirkungsgrad beinhalten. Es ist vollständig in der Leittechnik integriert und gibt den Kesselwirkungsgrad oder eine ähnliche normierte Größe an die Hauptregelungsstrukturen des Kraftwerks weiter. Dies bedeutet, dass das neuronale Netz in der Kraftwerksleittechnik aufgebaut wird, dort "online" rechnet, und zur Vorsteuerung des Brennstoffes direkt verwendet wird.

Anstelle des tatsächlichen Kesselwirkungsgrads kann durch das künstliche neuronale Netz auch eine den Wirkungsgrad repräsentierende Wirkungsgradinformation ermittelt werden, beispielsweise eine wirkungsgradabhängige Größe.

Die Erfindung wird nachfolgend näher erläutert. Dabei zeigt
- FIG 1: ein Ablaufschema zur Erstellung und Einfügung des neuronalen Netzes in der Kraftwerksleittechnik,
- FIG 2: die Grundstruktur der Erfindung mit ihren wesentlichen Bestandteilen und
- FIG 3: einen Schaltplan zur Vorsteuerung des Brennstoffs.

In den letzten Jahren haben die Schwankungen im Strommarkt zugenommen, nicht zuletzt wegen des steigenden Anteils der Windenergie für die deutschen und europäischen Stromnetze. Um wirtschaftlich agieren zu können, ist ein Energieversorgungsunternehmen daher bestrebt, mit seinem Kraftwerkspark so schnell wie möglich auf kurzfristige Veränderungen im Markt reagieren zu können. Mit Spitzenlastkraftwerken, wie es z.B. Gasturbinenkraftwerke sind, ist es relativ einfach, kurzfristig die Kraftwerksleistung zu variieren. Mittellastkraftwerke, wie z.B. viele Steinkohlekraftwerke, sind zwar auch dafür konzeptioniert, dass man die Kraftwerksleistung im laufendem Betrieb ständig verändern kann, doch sind bei diesen Kraftwerken viel geringere Leistungsgradienten möglich. Durch die neuen Bedingungen am Strommarkt ist auch ein Betreiber eines Mittellastkraftwerkes bestrebt, die maximalen Lastgradienten zu fahren. Dies ist nur mit einer sehr guten und genauen Regelungstechnik möglich. Ansonsten kann es beispielsweise zu einem verlangsamten Regelverhalten, zu einem Übersteuern des Sollwertes oder zu einem Schwingungsverhalten kommen. Erschwerend kommt bei dieser Regelungsaufgabe die starke Varianz in der Brennstoffqualität hinzu. Diese ist auf die veränderten Beschaffungsstrategien der Betreiber zurückzuführen, die des Öfteren ihre Lieferanten wechseln und immer mehr verschiedene Brennstoffarten nutzen. Das Ergebnis ist ein stark variierendes Kesselverhalten, für das viele bisherige Regelungskonzepte oder -ansätze nicht ausreichend genau sind. Die Frage einer verbesserten Lastregelung ist daher von immer größerer Bedeutung.

Aus dem Stand der Technik ist es bekannt, in einem Kraftwerk verschiedenste Regelkreise zu verwenden. Einige komplexere Regelkreise sind aus einer Vorsteuerung und einer anschließenden Korrekturregelung aufgebaut. Die Stellgrößen werden bei vorgegebenem Sollwert aus bekannten oder zum Teil in Modellen gebildeten Prozesszuständen zunächst näherungsweise berechnet. Die durch Prozessstörungen hervorgerufenen Ungenauigkeiten werden durch den Korrekturzweig entfernt. Somit stehen bei der Vorsteuerung die Stellgrößen sofort zur Verfügung. Es muss nicht erst eine Regelabweichung entstehen, damit eine Stellgröße generiert wird. Die Vorsteuerung ist rückwirkungsfrei, das heißt, das Ergebnis der Vorsteuerung wird nicht zurückgeführt (sondern nur die Regelgröße). Die Vorsteuerung sorgt dafür, dass der Gesamtregelkreis stabiler ist, da der Korrekturregler nur noch einen kleinen Regelbereich abdecken muss. Vorraussetzung dafür ist allerdings, dass die Vorsteuerung mit einer gewissen Genauigkeit arbeitet. Das Ziel der Vorsteuerung liegt im beschleunigten Führungsverhalten.

Gerade bei Prozessen mit einer großen Zeitkonstante für die Regelstrecke (was z.B. für einen Kraftwerkskessel gilt) ist es aus dem Stand der Technik bekannt, den Regelkreis mit einer Vorsteuerung zu ergänzen. Andernfalls können durch den Regelvorgang größere Abweichungen der Hauptregelgrößen wie Druck und Temperatur des Frischdampfes oder Generatorleistung entstehen. Wird beispielsweise in einem Dampfkraftwerk eine Leistungsrampe gefahren, so wird der Leistungssollwert zunächst durch einen gradientengeführten Sollwert gebildet. Dadurch wird die Änderungsgeschwindigkeit der Leistung, die vor allem durch Werkstoffeigenschaften des Kessels und der Turbine vorgegeben wird, nicht überschritten. Teilt man den aktuell anstehenden gradientengeführten Leistungssollwert durch den Blockwirkungsgrad (brutto) im Zustand dieses Leistungssollwertes, so erhält man den dazugehörigen stationären Sollwert (Feuerungsleistung). Diese Feuerungsleistung dient dann als Sollwert für die unterlagerten Brennstoffregelungen des Kraftwerks. Bei diesem Prinzip der Vorsteuerung treten allerdings zwei grundlegende Probleme auf:
Zum einen ist die Information des Blockwirkungsgrades nicht verfügbar. Würde man ihn berechnen, so müsste man auf dynamische Prozessdaten zurückgreifen. Diese Berechnung wäre sehr fehlerbehaftet, da sich viele Prozessgrößen, wie z.B. Druck und Temperatur vom Wasser-Dampf-Kreislauf erst mit einer sehr großen Zeitkonstante verändern, andere Größen (wie z.B. Luft- und Brennstoffmenge) wiederum sehr schnell. Man könnte damit auch nur den aktuellen Wirkungsgrad berechnen und nicht den Wirkungsgrad des anstehenden Leistungssollwertes. Eine weitere Methode wäre die Vorausberechnung des Wirkungsgrades durch eine Online-Simulationsrechnung. Doch dafür müsste ein sehr komplexes Modell der Kraftwerksanlage erstellt werden und die Simulation müsste so schnell sein, dass sie in jedem Rechenzyklus der Regelung einen neuen Wert liefern kann. Beide Methoden werden durch die aus dem Stand der Technik bekannten Lösungen nicht verwendet, da sie entweder sehr fehlerbehaftet sind, oder nur mit einem immensen Rechen- und Projektierungsaufwand zu zufriedenstellenden Ergebnissen führen würden.

Statt dessen wird ein konstanter Wirkungsgrad für die Berechnung des Feuerleistungssollwertes angenommen. Die Genauigkeit des Ergebnisses ist aus diesem Grund sehr beschränkt.

Zum anderen erhält man durch die Berechnung der Feuerleistung mit der Vorsteuerung nur die stationäre Feuerleistung des Sollwertes. Mit dieser Feuerleistung würde man die vorgegebene Rampe jedoch nicht fahren können, die Änderungsgeschwindigkeit der Leistung wäre zu gering. In der Praxis wäre ein Aufschlag auf den Sollwert der Feuerungsleistung hinzuzurechnen, um die gewünschte Änderungsgeschwindigkeit zu erhalten und den Dampfeinspeicherungs- und Dampfausspeicherungsprozess zu steuern. Dazu würde ein Korrekturfaktor verwendet werden, der den errechneten Feuerleistungssollwert durch Addition (oder Subtraktion) anpasst. Der Korrekturfaktor ist keine Konstante, sondern eine Variable, die abhängig von der Sollwertänderung und der vorgegebenen Änderungsgeschwindigkeit der Leistung ist. Letztendlich wird der so errechnete Sollwert der Feuerungsleistung je nach Fahrweise der Anlage durch den Korrekturregler, der in den meisten Fällen als Druckregler des Kessels geschaltet ist, korrigiert.

Mit der vorliegenden Erfindung, insbesondere durch die Verwendung eines neuronalen Netzes, ist es möglich, den Wirkungsgrad ohne dynamische Effekte zu berechnen. Der resultierende Feuerungsleistungssollwert ist genauer, als dies mit einem konstanten Wirkungsgrad oder mit einem mit dynamischen Prozessdaten berechneten Wirkungsgrad der Fall wäre. Es wird zwar weiterhin mit einem Korrekturfaktor gearbeitet, doch ist dies nicht nachteilig. Denn je genauer die Berechnung der stationären Feuerungsleistung ist, desto weniger wird der Fehler bei dieser Berechnung durch den Korrekturfaktor verstärkt. Daraus ergibt sich, dass der Korrekturregler weniger korrigieren muss, da die Hauptregelgrößen mit geringeren Abweichungen behaftet sind. Im Ergebnis kommt es zu einem harmonischeren Verlauf und die Leistungsrampe kann genauer gefahren werden. Daraus ergibt sich auch, dass der Leistungs-Sollwert in vielen Fällen schneller erreicht werden kann, ohne dabei die technischen Vorgaben zu überschreiten.

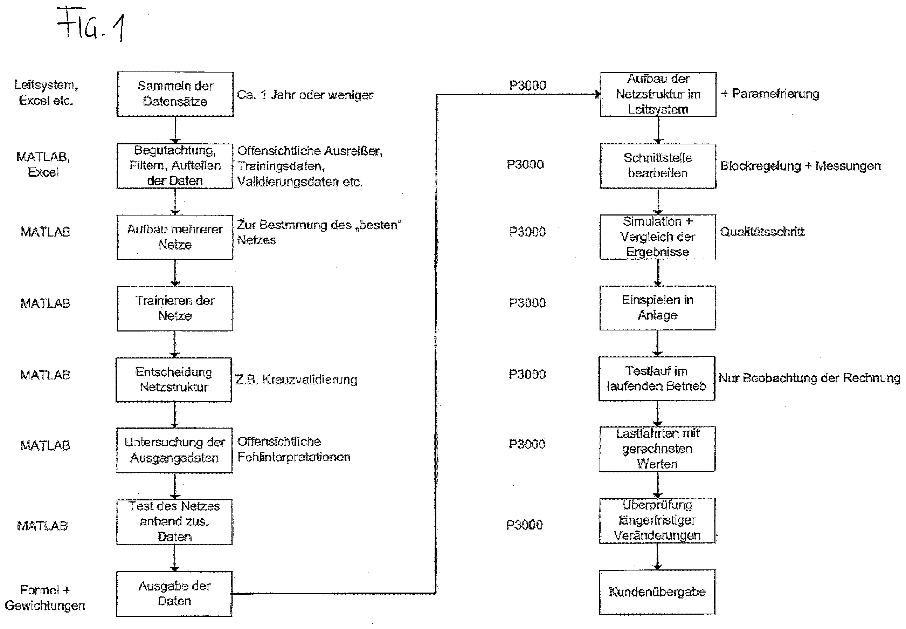

In FIG 1 ist ein Ablaufschema zur Erstellung und Einfügung des neuronalen Netzes in die Kraftwerksleittechnik dargestellt. Dabei wird beispielhaft davon ausgegangen, dass zunächst das neuronale Netz erstellt und trainiert wurde (linke Seite der Grafik) und im Anschluss daran eine Integration des neuronalen Netzes in die Leittechnik ("P3000"), d.h. das Leitsystem des Kraftwerks erfolgt (rechte Seite der Grafik). Das Erstellen und Trainieren des neuronalen Netzes erfolgte dabei unter Verwendung der Programme Microsoft EXCEL sowie MATLAB.

Hierzu wurden im Beispiel zunächst Datensätze eines laufenden Kraftwerksbetriebes über einen Zeitraum von ca. 12 Monaten gesammelt. Anschließend erfolgte eine Bearbeitung dieser Datensätze (Begutachtung, Filtern, Aufteilen der Daten), um offensichtliche Ausreißer zu entfernen und die späteren Trainings- bzw. Validierungsdaten für das Parametrieren des neuronalen Netzes zu ermitteln. Da im vorliegenden Beispiel noch keine Erfahrungen mit neuronalen Netzen für derartige Anwendungen vorlagen, wurden zunächst mehrere neuronale Netze aufgebaut und mit den o.g. Daten trainiert. Im Anschluss daran wurde unter Zuhilfenahme der Methode der Kreuzvalidierung entschieden, welche Netzstruktur verwendet werden soll. Nachdem die Struktur des zu verwendenden neuronalen Netzes feststand, wurden die Ausgangsdaten untersucht, um offensichtliche Fehlinterpretationen auszuschließen. Anschließend wurde das neuronale Netz ausführlich getestet, dies auch unter Verwendung zusätzlicher Daten. Am Ende dieses Prozesses stand ein funktionstüchtiges neuronales Netz zur Verfügung, mit dessen Hilfe der Kesselwirkungsgrad eines Dampfkraftwerks bestimmt werden konnte.

Im Anschluss daran erfolgte die Integration des neuronalen Netzes in die Leittechnik des Kraftwerks. Dazu wurde das neuronale Netz in diejenigen Strukturen der Leittechnik integriert, die für die Prozessoptimierung zuständig sind. Nach dem Aufbau der Netzstruktur in der Leittechnik und der entsprechenden Parametrierung erfolgte eine Bearbeitung der Schnittstelle des neuronalen Netzes zu derjenigen Komponente, die zur Regelung und/oder Steuerung der einzelnen Kraftwerksblöcke zuständig ist. Nachdem die Leittechnik die Qualitätsüberprüfung in Form einer Simulation überstanden hatte, erfolgte die eigentliche Inbetriebnahme, bei der zunächst mit einem Testlauf im laufenden Kraftwerksbetrieb begonnen wurde. Während dieses Testlaufes wurden zunächst nur die ermittelten Wirkungsgrade betrachtet, ohne dass dies einen regelnden und/oder steuernden Eingriff in den Kraftwerksbetrieb zur Folge hatte. In einem nächsten Schritt erfolgten dann Lastfahrten mit zuvor berechneten Werten. Da auch eine Überprüfung über einen längeren Zeitraum keine Abweichungen von den gewünschten Verhalten ergab, konnte die Übergabe der Kraftwerksleittechnik an den Kunden erfolgen, der die Leittechnik dann im Kraftwerk unmittelbar einsetzte.

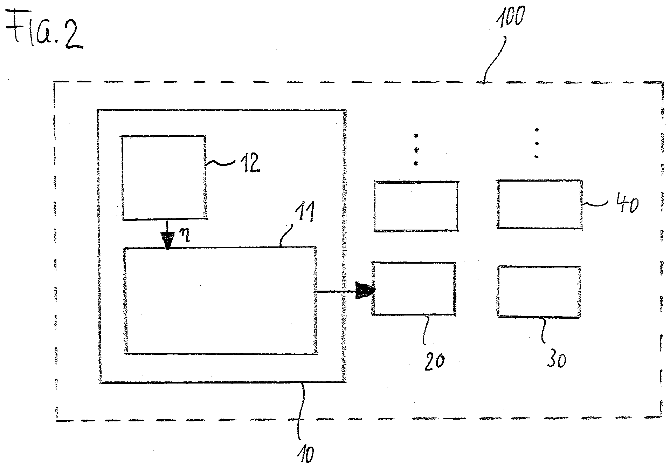

In FIG 2 ist die Grundstruktur der Erfindung mit ihren wesentlichen Bestandteilen abgebildet. Das Kraftwerk 100 umfasst neben einer Leittechnik 10 eine Reihe von Betriebsmodulen 20, 30, 40, u.a. ein Modul 20 für die Brennstoffzufuhr. Die Leittechnik 10 umfasst neben einer Regelungs- und/oder Steuerungskomponente 11, die u.a. zur Regelung und/oder Steuerung des Moduls 20 zur Brennstoffzufuhr dient, ein künstliches neuronales Netz 12. Die Ausgangsgröße des neuronalen Netzes 12, der Wirkungsgrad η des Kraftwerks, wird direkt als Eingangsgröße der Regelungs- und/oder Steuerungskomponente 11 verwendet.

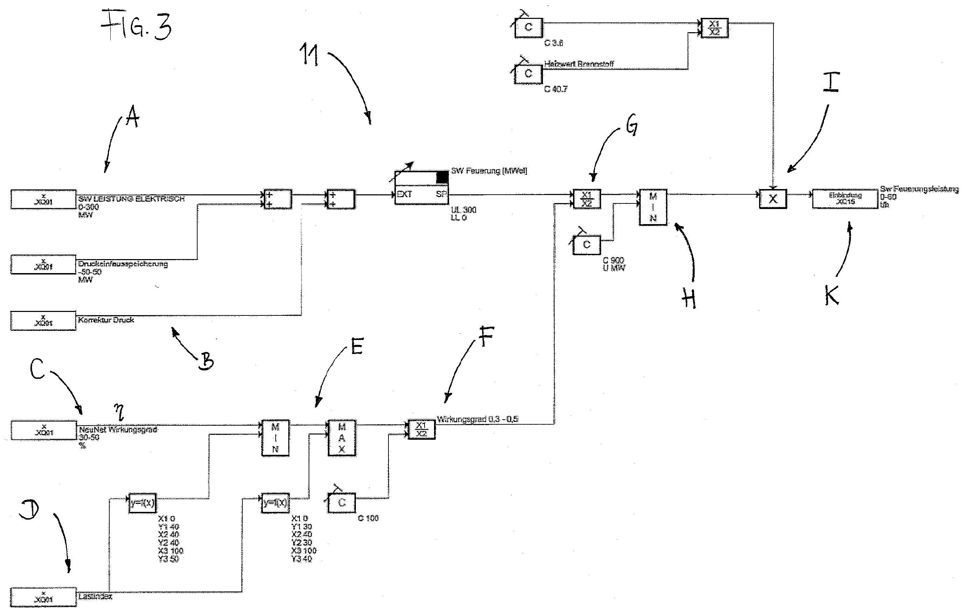

In FIG 3 ist ein Blockschaltbild der Regelungs- und/oder Steuerungskomponente 11 abgebildet, anhand dessen nachfolgend die Vorsteuerung des Brennstoffes erläutert werden soll.

Der Sollwert der elektrischen Leistung (z.B. eine elektrische Leistung zwischen 0 und 300 MW) wird als Eingabewert für die Leittechnik des Kraftwerks bereitgestellt (siehe Pfeil A).

Zusätzlich zu der Vorgabe der gewünschten elektrischen Leistung ist in einem Dampfkraftwerk stets der Druck zwischen Kessel und Turbine auf einen bestimmten Sollwert zu halten. Hierzu dient ein Druckspeicher. Sobald der Druck abgefallen ist, muss die Feuerungsleistung entsprechend erhöht werden (siehe Pfeil B). Ein Anteil der benötigten Feuerungsleistung dient also nicht zur Erhöhung der elektrischen Leistung, sondern lediglich dazu, den Druck zwischen Kessel und Turbine auf dem erforderlichen Sollwert zu halten.

Um eine Steuerung des Kraftwerks zum Erreichen dieser (auch den Drucksollwert berücksichtigenden) elektrischen Leistung zu erreichen, muss zunächst eine Umrechnung von der gewünschten elektrischen Leistung auf die erforderliche thermische Leistung erfolgen. Ausschlaggebend hierfür ist der Wirkungsgrad des Kraftwerks, der mit Hilfe eines in der Leittechnik 10 integrierten künstlichen neuronalen Netzes 12 berechnet wird. Der solcherart berechnete Wirkungsgrad η wird als weiterer Eingabewert bereitgestellt (siehe Pfeil C). Beispielsweise liegt der Wirkungsgrad zwischen 30 und 50%.

Abhängig von einem als weitere Eingangsgröße bereitgestellten Lastindex, der Werte zwischen 0 und 100% annehmen kann (siehe Pfeil D), durchläuft der ermittelte Wirkungsgrad zwei Begrenzer (Min, Max), um offensichtliche Fehlwerte auszuschließen (siehe Pfeil E). Im Anschluss daran wird aus praktischen Gründen der bis hierher in Prozent angegebene Wirkungsgrad durch 100 geteilt, so dass sich ein Wirkungsgrad zwischen 0,3 und 0,5 ergibt (siehe Pfeil F). Der in Megawatt angegebene elektrische Leistungs-Sollwert wird dann mit dem ermittelten Wirkungsgrad ins Verhältnis gesetzt (siehe Pfeil G), so dass sich ein thermischer Leistungs-Sollwert ergibt, der einen Wert von 900MW nicht überschreiten darf. Dies wird im Beispiel durch einen weiteren Begrenzer (Min) sichergestellt (siehe Pfeil H). Im Anschluss daran wird dieser thermische Leistungs-Sollwert unter Verwendung des Heizwertes des verwendeten Brennstoffes in einen Tonnagewert (Feuerungsleistung) umgerechnet (siehe Pfeil I). Die Feuerungsleistung beträgt dabei beispielsweise zwischen 0 und 60 Tonnen pro Stunde. Diese Feuerungsleistung ist erforderlich, um den gewünschten elektrischen Leistungs-Sollwert bei gleichzeitiger Einhaltung des Drucksollwertes zu erreichen und wird zur Vorsteuerung des entsprechenden Kraftwerksblocks unter Verwendung des Betriebsmoduls 20 verwendet (siehe Pfeil K).

## Patentansprüche

1. Verfahren zum Betrieb eines Kraftwerks (100), **dadurch gekennzeichnet, dass**
- ein in die Leittechnik (10) des Kraftwerks (100) integriertes künstliches neuronales Netz (12) im laufenden Kraftwerksbetrieb unter Vorgabe wenigstens einer für einen zukünftigen Zeitpunkt gewünschten elektrischen Soll-Leistung des Kraftwerks (100) einen für diesen zukünftigen Zeitpunkt gültigen und von einer Mehrzahl von Einflussgrößen abhängigen Wirkungsgrad oder eine diesen Wirkungsgrad repräsentierende Wirkungsgradinformation ermittelt und
- die Leittechnik (10) unter automatischer Verwendung dieses für diesen zukünftigen Zeitpunkt gültigen und von der Mehrzahl von Einflussgrößen abhängigen Wirkungsgrades oder der diesen Wirkungsgrad repräsentierenden Wirkungsgradinformation einen regelnden und/oder steuernden Eingriff in den Kraftwerkbetrieb zum Erreichen der gewünschten elektrischen Soll-Leistung des Kraftwerks (100) durchführt.

2. Verfahren nach Anspruch 1, **dadurch gekennzeichnet, dass** das Kraftwerk (100) ein Heiz- oder Wärmekraftwerk, insbesondere ein Dampfkraftwerk, ist.

3. Verfahren nach einem der Ansprüche 1 bis 2, **dadurch gekennzeichnet, dass** der Wirkungsgrad ein Kesselwirkungsgrad ist.

4. Verfahren nach mindestens einem der voranstehenden Ansprüche, **dadurch gekennzeichnet, dass** die Leittechnik (10) unter automatischer Verwendung dieses Wirkungsgrades bzw. dieser Wirkungsgradinformation eine Regelung und/oder Steuerung einer Brennstoffzufuhr, insbesondere eine Vorsteuerung wenigstens einer Brennstoffkomponente in den Hauptregelungsstrukturen des Kraftwerks (100), durchführt.

5. Leittechnik (10) für ein Kraftwerk (100), **gekennzeichnet durch**
- ein integriertes künstliches neuronales Netz (12), ausgebildet zur Ermittlung eines für einen zukünftigen Zeitpunkt gültigen und von einer Mehrzahl von Einflussgrößen abhängigen Wirkungsgrad oder einer diesen Wirkungsgrad repräsentierenden Wirkungsgradinformation unter Vorgabe wenigstens einer für den zukünftigen Zeitpunkt gewünschten elektrischen Soll-Leistung des Kraftwerks (100) im laufenden Kraftwerksbetrieb, sowie
- eine Regelungs- und/oder Steuerungskomponente (11), ausgebildet zum regelnden und/oder steuernden Eingriff in den Kraftwerksbetrieb unter automatischer Verwendung dieses für diesen zukünftigen Zeitpunkt gültigen und von der Mehrzahl von Einflussgrößen abhängigen Wirkungsgrades oder der diesen Wirkungsgrad repräsentierenden Wirkungsgradinformation zum Erreichen der gewünschten elektrischen Soll-Leistung des Kraftwerks (100).

6. Leittechnik (10) nach Anspruch 5, **dadurch gekennzeichnet, dass** das neuronale Netz (12) basierend auf den Datensätzen eines realen Kraftwerks parametriert ist, wobei die Datensätze eine Mehrzahl von Einflussgrößen auf diejenige Kenngröße umfassen, die bei Anwendung des neuronalen Netzes (12) ermittelt werden soll.

7. Leittechnik (10) nach Anspruch 6, **dadurch gekennzeichnet, dass** es sich bei den Einflussgrößen um eine oder mehrere der folgenden Größen handelt: elektrische Leistung des Kraftwerks, Energieströme der Brennstoffe, Heizwerte der Brennstoffe, Kühlwassertemperatur.

## Claims

1. Method for operating a power station (100), **characterised in that**
- when the power station is running, by specifying at least one desired electrical output of the power station (100) for a future moment in time, an artificial neuronal network (12) integrated in the control and protection system (10) of the power station (100) determines an efficiency valid for this future moment in time and dependent on a plurality of influencing variables or an efficiency information representing this efficiency, and
- by automatically using this efficiency valid for this future moment in time or the efficiency information representing this efficiency the control and protection system (10) carries out a regulating and/or controlling intervention in the operation of the power station to achieve the desired electrical output of the power station (100).

2. Method according to claim 1, **characterised in that** the power station (100) is a combined heating and power station or thermal power station, in particular a steam power station.

3. Method according to one of claims 1 to 2, **characterised in that** the efficiency is a boiler efficiency.

4. Method according to at least one of the preceding claims, **characterised in that** the control and protection system (10) carries out regulation and/or control of a fuel supply, in particular pre-control of at least one fuel component in the main regulating structures of the power station (100), by automatically using this efficiency or efficiency information.

5. Control and protection system (10) for a power station (100), **characterised by**
- an integrated artificial neuronal network (12), embodied to determine an efficiency valid for a future moment in time or dependent on a plurality of influencing variables or an efficiency information representing this efficiency by specifying at least one desired electrical output for the future moment in time when the power station is running, and
- a regulating and/or control component (11), embodied for regulating and/or controlling intervention in the operation of the power station by automatically using this efficiency valid for this future moment in time or dependent on the plurality of influencing variables or the efficiency information representing this efficiency to achieve the desired electrical output of the power station (100).

6. Control and protection system (10) according to claim 5, **characterised in that** the neuronal network (12) is parameterised on the basis of the data records of a real power station, the data records comprising a plurality of variables influencing the characteristics which are to be determined when using the neuronal network (12).

7. Control and protection system (10) according to claim 6, **characterised in that** the influencing variables are one or more of the following variable(s): electrical output of the power station, energy fluxes of the fuels, heating values of the fuels, cooling water temperature.

## Revendications

1. Procédé pour faire fonctionner une centrale (100) électrique, **caractérisé en ce que**
- un réseau (12) neuronal artificiel intégré à la technique (10) de conduite de la centrale (100) détermine, en fonctionnement courant de la centrale, avec prescription d'au moins une puissance de consigne électrique souhaitée à un instant à venir de la centrale (100), un rendement valable pour cet instant à venir et dépendant d'une pluralité de paramètres ou une information de rendement représentant ce rendement et
- la technique (10) de conduite effectue, en utilisant automatiquement ce rendement valable pour cet instant à venir et dépendant de la pluralité de paramètres ou l'information de rendement représentant ce rendement, une intervention de régulation et/ou de commande dans le fonctionnement de la centrale pour obtenir la puissance de consigne électrique souhaitée de la centrale (100).

2. Procédé suivant la revendication 1, **caractérisé en ce que** la centrale (100) est une centrale thermique ou une centrale à chaleur, notamment une centrale à vapeur.

3. Procédé suivant l'une des revendications 1 à 2, **caractérisé en ce que** le rendement est un rendement de chaudière.

4. Procédé suivant au moins l'une des revendications précédentes, **caractérisé en ce que** la technique (10) de conduite effectue, en utilisant automatiquement ce rendement ou cette information de rendement, une régulation et/ou une commande d'un apport de combustible, notamment un pilotage d'au moins un constituant de combustible dans la structure de régulation principale de la centrale (100).

5. Technique (10) de conduite pour une centrale (100), **caractérisée par**
- un réseau (12) neuronal artificiel intégré, constitué pour déterminer un rendement valable pour un instant à venir et dépendant d'une pluralité de paramètres ou une information de rendement représentant ce rendement, avec prescription d'au moins une puissance de consigne électrique souhaitée pour cet instant à venir de la centrale (100) dans le fonctionnement courant de la centrale, ainsi que
- un composant (11) de régulation et/ou de commande, constitué pour intervenir en régulation et/ou en commande dans le fonctionnement de la centrale, en utilisant automatiquement ce rendement valable pour cet instant à venir et dépendant de la pluralité de paramètres ou l'information de rendement représentant ce rendement, pour obtenir la puissance de consigne électrique souhaitée de la centrale (100).

6. Technique (10) de conduite suivant la revendication 5, **caractérisée en ce que** le réseau (12) neuronal est paramétré sur la base des jeux de données d'une centrale réelle, les jeux de données comprenant une pluralité de paramètres influant sur la grandeur caractéristique, qui doit être déterminée lors de l'application du réseau (12) neuronal.

7. Technique (10) de conduite suivant la revendication 6, **caractérisée en ce que** les paramètres sont une ou plusieurs des grandeurs suivantes : puissance électrique de la centrale, courant énergétique des combustibles, valeur calorifique des combustibles, température de l'eau de refroidissement.
